# EUROPEAN PATENT APPLICATION

(11) **EP 3 606 136 A1**
(43) Date of publication of application: **05.02.2020**
(21) Application number: 17903259.4
(22) Date of filing: 13.12.2017
(51) Int. Cl.: H04W 24/02

(54) **METHOD AND APPARATUS FOR MONITORING WLAN STATE, AND TERMINAL**

(30) Priority: 27.03.2017 CN 201710188265
(71) Applicant: ZTE Corporation, Shenzhen, Guangdong 518057 (CN)
(72) Inventor: YANG, Kun, Shenzhen Guangdong 518057 (CN); WU, Hao, Shenzhen Guangdong 518057 (CN); DING, Jianfeng, Shenzhen Guangdong 518057 (CN)
(74) Representative: Hervouet-Malbec, Sylvie
(86) International application number: PCT/CN2017/115796
(87) International publication number: WO 2018/176914

(57) **Abstract**

Disclosed are a method and apparatus for monitoring a WLAN state, and a terminal. The method comprises: receiving configuration information, delivered by a base station, about joint transmission between a mobile communication network and a wireless local area network (WLAN), wherein the configuration information comprises constants (i.e. a first pre-set threshold value) of the duration and number of times of a timer; and monitoring the WLAN state according to the constants of the duration and number of times of the timer.

## Description

### TECHNICAL FIELD

The present disclosure relates to the field of communications technologies, and for example, relates to a method and apparatus for monitoring a WLAN status, and a terminal.

### BACKGROUND

In joint transmission between a wireless local area network (WLAN) and a long term evolution (LTE) network, that is, in an LTE-WLAN aggregation (LWA) architecture, an LTE base station (such as an evolved node B (eNB)) allows access by a WLAN base station (such as a WLAN termination (WT)) so that the LTE base station may allocate and schedule wireless resources more flexibly according to signal conditions, loads, resource states, and channel conditions of the LTE network and the WLAN network. Data that implements the same bearer can be transmitted on both LTE and WLAN links, thereby improving quality of service (QoS) for users as well as an overall communication system capacity.

However, in actual use, a terminal, such as a user equipment (UE), cannot effectively monitor the status of the WLAN network.

### SUMMARY

The present disclosure provides a method and apparatus for monitoring a WLAN status, and a terminal, which can solve the problem that the UE cannot effectively monitor the WLAN status in the related art.

The present disclosure provides a method for monitoring a WLAN status of a wireless local area network (WLAN), including: receiving configuration information, delivered by a base station, about joint transmission between a mobile communication network and a WLAN, wherein the configuration information includes a timer duration (duration of a timer) and a first preset threshold of the number of times that WLAN connection is temporarily unavailable; and monitoring a status of WLAN connection according to the timer duration and the first preset threshold.

Optionally, the step of monitoring the status of WLAN connection according to the timer duration and the first preset threshold includes: detecting that WLAN connections with all WLANs in a WLAN mobility set become temporarily unavailable; setting a timer according to the timer duration, and starting or restarting the timer; setting the status of WLAN connection to a suspended status; and reporting the suspended status of WLAN connection to the base station.

Optionally, after reporting the suspended status of WLAN connection to the base station, the method further includes: detecting, within the timer duration, the number of times that WLAN connections with all WLANs in the WLAN mobility set become temporarily unavailable, setting, when it is determined that the number of times that WLAN connections with all WLANs in the WLAN mobility set become temporarily unavailable is less than the first preset threshold, the status of WLAN connection to a suspended status, and reporting the suspended status of WLAN connection to the base station.

Optionally, after reporting the suspended status of WLAN connection to the base station, the method further includes: detecting, within the timer duration, that WLAN connections with all WLANs in the WLAN mobility set become temporarily unavailable, setting, when it is determined that the number of times that WLAN connections with all WLANs in the WLAN mobility set become temporarily unavailable is equal to or greater than the first preset threshold, the status of WLAN connection to a failed status, stopping the timer, and reporting the failed status of WLAN connection to the base station.

Optionally, after reporting the suspended status of WLAN connection to the base station, the method further includes: detecting, in a case where a last reported status of WLAN connection is the suspended status, that a current WLAN connection with a WLAN in the WLAN mobility set is successfully established or maintained again; setting the status of WLAN connection to a resumed status; and reporting the resumed status of WLAN connection to the base station.

Optionally, after reporting the resumed status of WLAN connection to the base station, the method further includes executing at least one of: receiving a first protocol data unit (PDU) through a WLAN according to the configuration information; and sending a second protocol data unit (PDU) through a WLAN according to the configuration information.

Optionally, after reporting the failed status of WLAN connection to the base station, the method further includes executing at least one of: stopping monitoring the status of WLAN connection; and stopping attempts to connect to the WLAN.

Optionally, the configuration information further includes a second preset threshold of the number of times that WLAN connection is temporarily unavailable;
the step of setting the timer according to the timer duration, and starting or restarting the timer includes: setting, when it is detected that the number of times that WLAN connections with all WLANs in the WLAN mobility set become temporarily unavailable is greater than or equal to the second preset threshold, the timer according to the timer duration, and starting or restarting the timer.

The present disclosure further provides an apparatus for monitoring a WLAN status. The apparatus is applied to a terminal device, and includes: a receiving module configured to receive configuration information, delivered by a base station, about joint transmission between a mobile communication network and a WLAN, wherein the configuration information includes a timer duration and a constant of number of times; a monitoring module configured to monitor the WLAN status according to the timer duration and the constant of number of times.

Optionally, the monitoring module includes: a first detecting unit configured to detect that WLAN connections with all WLANs in a WLAN mobility set become temporarily unavailable; a starting unit configured to set a timer according to the timer duration and start or restart the timer, and set the status of WLAN connection to a suspended status; and a first reporting unit configured to report the suspended status of WLAN connection to the base station.

Optionally, the monitoring module further includes: a second detecting unit configured to detect, after the suspended status of WLAN connection is reported to the base station, that WLAN connections with all WLANs in the WLAN mobility set become temporarily unavailable within the timer duration, and determine that the number of times that WLAN connections with all WLANs in the WLAN mobility set become temporarily unavailable is equal to or greater than the first preset threshold; a first setting unit configured to set the status of WLAN connection to a failed status, and stop the timer; and a second reporting unit configured to report the failed status of WLAN connection to the base station.

Optionally, the monitoring module further includes: a third detecting unit configured to detect, after the suspended status of WLAN connection is reported to the base station and in a case where a last reported status of WLAN connection is the suspended status, that a current WLAN connection with a WLAN in the WLAN mobility set is successfully established or maintained again; a second setting unit configured to set the status of WLAN connection to a resumed status; and a third reporting unit configured to report the resumed status of WLAN connection to the base station.

Optionally, the apparatus further includes: a transmitting module configured to execute, after the third reporting unit reports the resumed status of WLAN connection to the base station, at least one of: receiving a first protocol data unit (PDU) through a WLAN according to the configuration information; and sending a second protocol data unit (PDU) through a WLAN according to the configuration information.

Optionally, the configuration information further includes a second preset threshold of the number of times that WLAN connection is temporarily unavailable; and
the starting unit is configured to set, when it is detected that the number of times that WLAN connections with all WLANs in the WLAN mobility set become temporarily unavailable is greater than or equal to the second preset threshold, the timer according to the timer duration, and start or restart the timer.

Optionally, the monitoring module further includes: a fourth detecting unit configured to detect, after the suspended status of WLAN connection is reported to the base station, the number of times that WLAN connections with all WLANs in the WLAN mobility set become temporarily unavailable within the timer duration, and determine that the number of times that WLAN connections with all WLANs in the WLAN mobility set become temporarily unavailable is less than the first preset threshold;
a third setting unit configured to set the status of WLAN connection to the suspended status; and
a fourth reporting unit configured to report the suspended status of WLAN connection to the base station.

The present disclosure further provides a terminal, including: a processor and a memory storing processor-executable instructions which, when executed by the processor, perform the following operations: receiving configuration information, delivered by a base station, about joint transmission between a mobile communication network and a WLAN, wherein the configuration information includes a timer duration and a first preset threshold of the number of times that WLAN connection is temporarily unavailable; and monitoring a status of WLAN connection according to the timer duration and the first preset threshold.

The present disclosure further provides a storage medium. The storage medium is configured to store a program code for performing the steps of:
receiving configuration information, delivered by a base station, about joint transmission between a mobile communication network and a WLAN, wherein the configuration information includes a timer duration and a first preset threshold of the number of times that WLAN connection is temporarily unavailable; and monitoring a status of WLAN connection according to the timer duration and the first preset threshold.

The present disclosure further provides a computer program product including a computer program stored on a non-transient computer-readable storage medium, the computer program including program instructions which, when executed by a computer, cause the computer to perform any one of the above methods.

The method and apparatus for monitoring a WLAN status, and the terminal provided by the present disclosure can effectively monitor the WLAN status by detecting the number of times that WLAN suspended status is reported within the timer duration.

### BRIEF DESCRIPTION OF DRAWINGS

Fig. 1 is a hardware structure block diagram of a mobile terminal according to an embodiment;
Fig. 2 is a network architecture diagram according to an embodiment;
Fig. 3 is a flowchart of a method for monitoring a WLAN status according to an embodiment;
Fig. 4a is a structural block diagram of an apparatus for monitoring a WLAN status according to an embodiment;
Fig. 4b is a structural block diagram of a monitoring module 42 according to an embodiment; and
Fig. 5 is a structural block diagram of a terminal according to an embodiment.

### DETAILED DESCRIPTION

Terms "first", "second", and the like in the description, claims and drawings of the disclosure are used for the purpose of distinguishing similar objects instead of indicating a specific order or sequence.

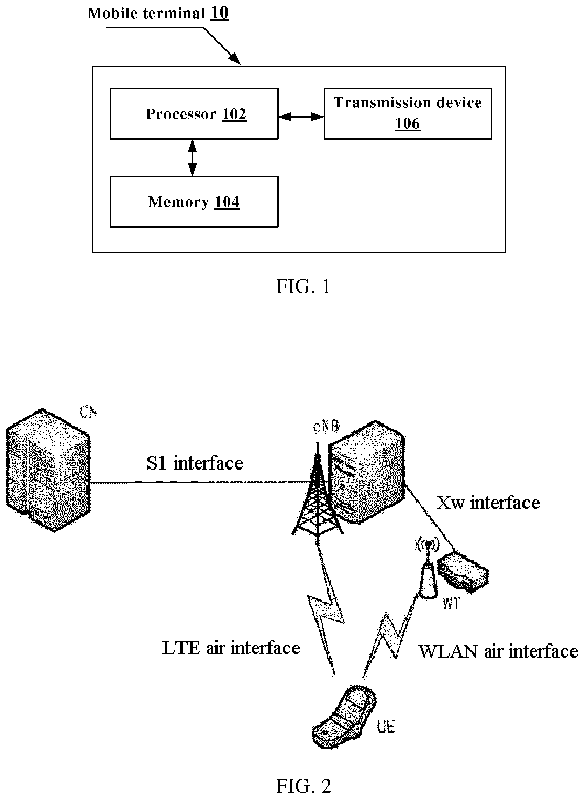

The method for monitoring a WLAN status according to the embodiments may be implemented in a mobile terminal, a computer terminal or similar computing devices. Taking running on a mobile terminal as an example, Fig. 1 is a block diagram showing a hardware structure of a mobile terminal executing a method for monitoring a WLAN status according to an embodiment. As shown in Fig. 1, a mobile terminal 10 may include one or more (only one shown) processors 102 (the processor 102 may include, but is not limited to, a processing device such as a microcontroller unit (MCU) or a field-programmable gate array (FPGA)), a memory 104 for storing data, and a transmission device 106 for communication functions. The structure shown in Fig. 1 is merely illustrative, and does not form any limitation to the structure of the above electronic devices. For example, the mobile terminal 10 may include more or fewer components than those as shown in Fig. 1, or have a different configuration than that as shown in Fig. 1.

The memory 104 may be configured to store software programs and modules of application software, such as program instructions/modules corresponding to the method for monitoring a WLAN status in the embodiment. The processor 102 executes the software programs and modules stored in the memory 104 to perform various functional applications and data processing, that is, implement the above method. The memory 104 may include a high speed random access memory and may also include a non-volatile memory such as one or more magnetic storage device, flash memory, or other non-volatile solid state memories. Optionally, the memory 104 may further include a memory remotely disposed relative to the processor 102. Such a remote memory may be connected to the mobile terminal 10 via a network. Examples of such networks include, but are not limited to, the Internet, intranets, local area networks, mobile communication networks, and combinations thereof.

The transmission device 106 is configured to receive or transmit data via a network. Specific examples of such networks may include a wireless network provided by a communication provider of the mobile terminal 10. Optionally, the transmission device 106 includes a network interface controller (NIC) that may be connected to other network apparatuses through a base station to communicate with the Internet. Optionally, the transmission device 106 may be a radio frequency (RF) module configured to communicate with the Internet wirelessly.

This embodiment may be operated on the network architecture shown in Fig. 2, and Fig. 2 is a network architecture diagram according to the embodiment. As shown in Fig. 2, the network architecture may be an LTE-WLAN aggregation architecture and may include: an eNB and a core network (CN) connected via an S1 interface; the eNB and a UE connected via an LTE air interface; and a WLAN termination (WT) and the UE connected via a WLAN air interface. An LTE base station includes the eNB; and a WLAN base station includes the WT. Information interaction between the eNB and the WT is implemented via a non-ideal loop, or an ideal or internal loop on the network side. In a scenario where the eNB and the WT are non-co-located, the eNB and the WT are connected with each other via an Xw interface. The base station in Fig. 2 is not limited to an eNB, but may also be a base station such as a gNB, an NB or other types of base stations.

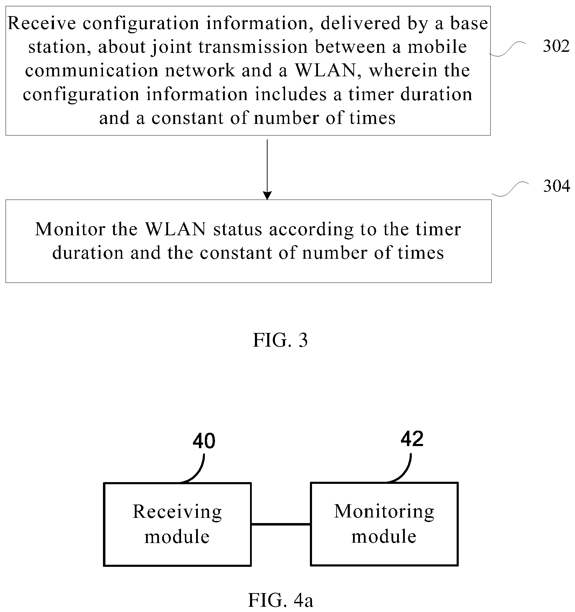

A constant of number of times in this embodiment is a first preset threshold, and an auxiliary constant of number of times is a second preset threshold. In this embodiment, a method for monitoring a WLAN status operated on the mobile terminal or the network architecture as described above is further provided. Fig. 3 is a flowchart of the method for monitoring a WLAN status according to this embodiment. As shown in Fig. 3, the flow may include steps 302 to 304.

At step 302, receiving configuration information, delivered by a base station, about joint transmission between a mobile communication network and a WLAN, wherein the configuration information includes a timer duration and the constant of number of times.

At step 304, monitoring the WLAN status according to the timer duration and the constant of number of times.

Through the above steps, the UE receives the configuration information about joint transmission between the mobile communication network and the WLAN(s) delivered by the base station, wherein the configuration information may include the timer duration and the constant of number of times (i.e., the above first preset threshold); and monitors the WLAN status according to the timer duration and the constant of number of times so that the WLAN status can be effectively monitored by detecting the number of times that a WLAN suspended status is reported within the timer duration.

Optionally, the executor of the above steps may be a terminal, such as a mobile phone; and the base station may be an eNB, a gNB, or the like, but is not limited thereto. In this embodiment, eNB is taken as an example for description.

Optionally, monitoring the WLAN status according to the constant of number of times within the timer duration includes steps 110 to 130:
At step 110, it is detected that WLAN connections with all WLANs in a WLAN mobility set become temporarily unavailable.
At step 120, a timer is set according to the timer duration, and then the timer is started or restarted, and the status of WLAN connection is set to a suspended status.
At step 130, the suspended status of WLAN connection is reported to the base station.

Optionally, after reporting the suspended status of WLAN connection to the eNB, the method may further include steps 140:
At step 140, when it is detected that, within the timer duration, WLAN connections with all WLANs in the WLAN mobility set become temporarily unavailable, and it is determined that the number of times that WLAN connections with all WLANs in the WLAN mobility set become temporarily unavailable is less than the constant of number of times, the UE sets the status of WLAN connection to a suspended status, and reports the suspended status of WLAN connection to the base station.

Optionally, after reporting the suspended status of WLAN connection to the eNB, the method may further include step 150:
At step 150, when it is detected that, within the timer duration, the WLAN connections with all WLANs in the WLAN mobility set become temporarily unavailable, and it is detected that the number of times that WLAN connections with all WLANs in the WLAN mobility set become temporarily unavailable is greater than or equal to the constant of number of times, the UE sets the status of WLAN connection to a failed status (failure).
At step 160, the timer is stopped.
At step 170, the failed status of WLAN connection is reported to the base station.

Optionally, the method according to the embodiment further includes steps 180 to 200:
At step 180, in a case where a last status of WLAN connection reported by the terminal is the suspended status, it is detected that a current WLAN connection with a WLAN in the WLAN mobility set is successfully established or maintained again; wherein the last status may be a last status reported within the current timer duration, that is, the status of WLAN connection reported to the base station last time.
At step 190, the status of WLAN connection is set to a resumed status.
At step 200, the resumed status of WLAN connection is reported to the base station.

Optionally, after the resumed status of WLAN connection is reported to the base station, the method according to the embodiment further includes step 210.

At step 210, a protocol data unit (PDU) is received and/or sent through a WLAN according to the configuration information delivered by the base station.

Optionally, after reporting the failed status of WLAN connection to the base station, the method according to the embodiment further includes step 220.

At step 220, monitoring of the WLAN status and/or attempts to connect to the WLAN are stopped.

Optionally, before setting the timer according to the timer duration and starting or restarting the timer, the method further includes: setting, when it is detected that the number of times that WLAN connections with all WLANs in the WLAN mobility set become temporarily unavailable is greater than or equal to the auxiliary constant of number of times, a timer according to the timer duration, and starting or restarting the timer, wherein the configuration information further includes an auxiliary constant of number of times which can be delivered to the terminal by the base station.

The method according to the above embodiment can be implemented by means of software complemented by a necessary versatile hardware platform, and of course, can be implemented by hardware, but in many cases, the former is preferred. Portions of the present disclosure that contribute to the prior art may be embodied in the form of a software product stored in a storage medium (such as an ROM/RAM, a disk, or an optical disc) and includes a number of instructions to make a terminal device (which may be a mobile phone, a computer, a server, or a network apparatus, etc.) to execute the methods of any embodiment of the present disclosure.

In the present embodiment, there is further provided an apparatus for monitoring a WLAN status, and the apparatus can implement the method for monitoring the WLAN status as described in the above embodiments. What has been explained above will not be repeated here. As used herein, the term "module" may be a combination of software and/or hardware that can realize a preset function. Although the apparatus described in the following embodiment is preferably implemented in software, hardware, or a combination of software and hardware, is also possible and contemplated.

Fig. 4a is a structural block diagram of an apparatus for monitoring a WLAN status according to this embodiment. As shown in Fig. 4a, the apparatus may include:
a receiving module 40 which is configured to receive configuration information, delivered by a base station, about joint transmission between a mobile communication network and a WLAN, wherein the configuration information includes a timer duration and a constant of number of times; and
a monitoring module 42 which is configured to monitor the WLAN status according to the timer duration and the constant of number of times.

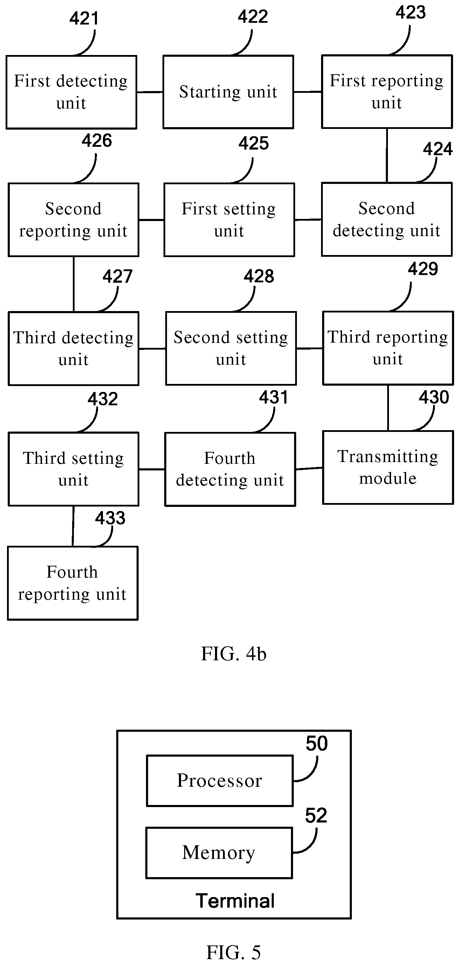

A schematic structural diagram of the monitoring module 42 is also provided in this embodiment. As shown in Fig. 4b, optionally, the monitoring module 42 includes: a first detecting unit 421 configured to detect that WLAN connections with all WLANs in a WLAN mobility set become temporarily unavailable; a starting unit 422 configured to set the timer according to the timer duration and start or restart the timer, and set the status of WLAN connection of a user equipment (UE) to a suspended status; and a first reporting unit 423 configured to report the suspended status of WLAN connection to the base station.

Optionally, the monitoring module 42 includes: a fourth detecting unit 431 configured to detect, after the suspended status of WLAN connection is reported to the base station, that WLAN connections with all WLANs in the WLAN mobility set become temporarily unavailable within the timer duration, and detect that the number of times that WLAN connections with all WLANs in the WLAN mobility set become temporarily unavailable is less than the constant of number of times; a third setting unit 432 configured to set the status of WLAN connection of the UE to the suspended status; and a fourth reporting unit 433 configured to report the suspended status of WLAN connection to the base station.

Optionally, the monitoring module 42 further includes: a second detecting unit 424 configured to detect, within the timer duration, that WLAN connections with all WLANs in the WLAN mobility set become temporarily unavailable, and detect that the number of times that WLAN connections with all WLANs in the WLAN mobility set become temporarily unavailable is greater than or equal to the constant of number of times; a first setting unit 425 configured to set the status of WLAN connection of a user equipment (UE) to a failed status, and stop the timer; and a second reporting unit 426 configured to report the failed status of WLAN connection to the base station.

Optionally, the monitoring module 42 further includes: a third detecting unit 427 configured to detect, in a case where a last reported status of WLAN connection is the suspended status, that WLAN connection with a WLAN in the WLAN mobility set is successfully established or maintained again; a second setting unit 428 configured to set the status of WLAN connection to a resumed status; and a third reporting unit 429 configured to report the resumed status of WLAN connection to the base station.

Optionally, the apparatus further includes: a transmitting module 430 configured to receive and/or send, after the third reporting unit reports the resumed status of WLAN connection to the base station, a PDU through the WLAN according to the configuration information.

Optionally, the configuration information further includes a second preset threshold of the number of times that WLAN connection is temporarily unavailable; and
the starting unit 422 is configured to set, when it is detected that the number of times that WLAN connections with all WLANs in the WLAN mobility set become temporarily unavailable is greater than or equal to the auxiliary constant of number of times, a timer according to the timer duration and start or restart the timer.

Optionally, the apparatus further includes: an instruction module configured to instruct, after the second reporting unit reports the failed status of WLAN connection to the base station, the UE to stop monitoring the WLAN status and/or stop attempts to connect to the WLAN.

Fig. 5 is a structural block diagram of a terminal according to an embodiment. As shown in Fig. 5, the terminal may include: a processor 50; and a memory 52 storing processor-executable instructions which, when executed by the processor 50, perform the following operations: receiving configuration information, delivered by a base station, about joint transmission between a mobile communication network and a WLAN, wherein the configuration information includes a timer duration and the constant of number of times; and monitoring the WLAN status according to the timer duration and the constant of number of times.

The above one or more modules may be implemented by software or hardware. For hardware, the implementing manner includes, but is not limited to: all of the above modules are located in the same processor; or, the above one or more modules are located in different processors in any combination.

In an embodiment, there is further provided a method for monitoring a WLAN status, and a terminal, both of which can solve the problem that the UE cannot effectively monitor the WLAN status.

In the network architecture shown in Fig. 2, the UEs in the related art cannot effectively monitor the WLAN status. For example, when the UE is allowed to use a suspended-resumed mechanism, if WLAN connections between the UE and all WLAN networks in a WLAN mobility set all become temporarily unavailable, the UE sets the status of WLAN connection to "suspended", and reports the status of WLAN connection; and if the status of WLAN connection is "suspended" in the last (latest) WLAN connection status report reported by the UE, and the WLAN connection with a WLAN in the WLAN mobility set is successfully established or maintained again, the UE sets the status of WLAN connection to "resumed", and reports the status of WLAN connection. However, the related art does not limit the frequency at which the UE sets the status of WLAN connection to "suspended". The status of WLAN connection between the UE and WLANs in the WLAN mobility set may become temporarily unavailable frequently, causing the UE to change settings of the status of WLAN connection and report the same frequently, and thus leading to ineffective monitoring of the WLAN status.

In view of this, in this embodiment, the number of times that WLAN connections between the UE and all WLANs in a WLAN mobility set become temporarily unavailable is counted within a given duration, thereby limiting the frequency at which the UE sets the status of WLAN connection to "suspended", and thus preventing the UE from frequently changing settings of the status of WLAN connection and reporting the same. It is also avoided that the UE or the network side frequently suspends LWA protocol data units (PDUs) transmitted through the WLAN network.

In an embodiment, there is further provided a method for monitoring a WLAN status, which may include steps 310-400.

At step 310, when a terminal receives an information element (IE) "LWA-Configuration" delivered by an eNB, if field "lwa-MobilityConfig" (LWA Mobility Configuration) of the IE contains the following parameters:
wlan-TimersAndConstants: containing timers and constants of UE adapted for LWA, including parameters t352 and n352, where t352 is a timer duration, and n352 is a constant of number of times;
t352: value "ms0" corresponds to 0 seconds, "ms200" corresponds to 200 seconds, and so on;
n352: value n1 corresponds to 1, n2 corresponds to 2, and so on,
the UE sets the timer "T352" and the constant "N352" to values of t352 and n352 in the parameter "wlan-TimersAndConstants".

For example, the base station configures the timer parameter "t352" and the constant "n352" and sends them to the UE so that the UE sets the timer parameter "T352" on the UE side to the value of t352, and sets the constant "N352" on the UE side to the value of n352.

The timer T352 is caused to stop when the UE successfully connects to a WLAN, or when the WLAN connection fails, or when an RRC connection (RRC_CONNECTED) is disconnected, or when a switch process is triggered, or when a connection re-establishment process is initiated.

At step 320, when the field wlan-SuspendResumeAllowed in the IE "VarWLAN-MobilityConfig" received by the UE is set to TRUE, that is, when the UE is allowed to use the suspend-resume mechanism, if WLAN connections between the UE and all WLANs in the WLAN mobility set become unavailable (i.e., if WLAN connection between the UE and any WLAN in the WLAN mobility set becomes unavailable), the UE performs the following operations:
starting or restarting the timer T352;
setting the field "status" in the IE "VarWLAN-Status" to "suspended"; and
reporting a WLAN connection status report (WLANConnectionStatusReport) message, and setting the field "status" in the IE "WLAN-Status" of the message to the value of the field "status" of the IE "VarWLAN-Status", that is, "suspended".

At step 330, the eNB receives the message reported by the UE, and parses the field "status" in the IE "WLAN-Status" of the message; if the parsing result is "suspended", the eNB stores the LWA context of the UE, and sets the field "status" in the IE "WLAN-Status" on the eNB side to the value of the field "status" in the IE "WLAN-Status" of the message on the UE side, that is, "suspended".

At step 340, if the connection status between the UE and the WLAN(s) is "suspended" in the latest WLAN connection status report reported by the UE, and WLAN connection between the UE and a WLAN in the WLAN mobility set is successfully established or maintained again, the UE performs the following operations:
setting the field "status" in the IE "VarWLAN-Status" to "resumed"; and
reporting a WLAN connection status report message, and setting the field "status" in the IE "WLAN-Status" of the message to the value of the field "status" of the IE "VarWLAN-Status", that is, "resumed".

At step 350, the eNB receives the connection status report message reported by the UE and parses the field "status" in the IE "WLAN-Status" of the message; if the parsing results is "resumed", the eNB sets the field "status" in the IE "WLAN-Status" on the eNB side to the value of the field "status" in the IE "WLAN-Status" of the message on the UE side, that is, "resumed".

At step 360, the UE continues to receive and/or send the LWA PDU through the WLAN according to the configuration information in the IE "LWA-Configuration" delivered by the eNB in the step 310.

Optionally, at step 370, if WLAN connections between the UE and all WLANs in the WLAN mobility set become temporarily unavailable, the UE may further perform the following operations:
determining, in a case where the timer T352 is running, whether the number of times that WLAN connections with all WLANs in the WLAN mobility set become temporarily unavailable is greater than or equal to N352 times;
returning to the step 340 when the number of times that WLAN connections with all WLANs in the WLAN mobility set become temporarily unavailable is less than N352 times;
setting, when the number of times that WLAN connections with all WLANs in the WLAN mobility set become temporarily unavailable is greater than N352 times, the field "status" in the IE "VarWLAN-Status" on the UE side to "failureWlanUnavailable" , and
stopping or restarting the timer T352 if the failure is due to an internal problem of the UE related to the WLAN.

The internal problem of the UE related to the WLAN may include: the UE being connected to another WLAN based on user preferences, the WLAN connection being closed, the WLAN connection being denied, or other WLAN connection problems.

At step 380, the UE reports the WLAN connection status report message, wherein the field "status" in the IE "WLAN-Status" of the message is set to the value of the field "status" of the IE "VarWLAN-Status", that is, "failureWlanUnavailable", and the UE stops monitoring the WLAN status and stops attempts to connect to the WLAN.

At step 390, the eNB receives the connection status report message reported by the UE and parses the field "status" in the IE "WLAN-Status" of the message; and if the parsing result is "failureWlanUnavailable", the eNB sets the field "status" in the IE "WLAN-Status" on the eNB side to the value of the field "status" in the IE "WLAN-Status" of the message on the UE side, that is, "failureWlanUnavailable".

At step 400, when the timer T352 expires, the UE stops or restarts the timer T352, and returns to the step 320 to continue to monitor the status of WLAN connection.

For example, the UE continuously monitors the status of WLAN connection within the timer duration. When WLAN connections between the UE and all WLANs in the WLAN mobility set become unavailable, the number of times that WLAN is unavailable is added up. If a case occurs where WLAN connection between the UE and a WLAN in the WLAN mobility set is successfully established or maintained again, the status of WLAN connection is set to the resumed status. Then, when WLAN connections between the UE and WLANs in the WLAN mobility set become unavailable again, the number of times that WLAN is unavailable is continued to be added up until the timer duration is reached. Then, the timer is restarted.

If the number of times that WLAN is unavailable is greater than or equal to N352 times when the timer duration is not reached, the status of WLAN connection is set to a failed status. At this time, the UE may stop or restart the timer, and stop monitoring the WLAN status and stop attempts to connect to the WLAN.

In this embodiment, when the number of times that the UE sets the WLAN status to "suspended" reaches a certain number of times, it indicates that the WLAN network in the WLAN mobility set is degraded. Then, the number of times that WLAN connections with all WLAN networks in the WLAN mobility set become temporarily unavailable is counted within a given duration. In this way, the frequency at which the UE sets the status of WLAN connection to "suspended" is limited, thereby avoiding changing settings of the status of WLAN connection and reporting the same frequently. It is also avoided that the UE or the network side frequently suspends LWA protocol data units (PDUs) transmitted through the WLAN network.

In an embodiment, there is further provided a method for managing WLAN suspension, which may include steps 410 to 500:
At step 410, when the UE receives an information element (IE) "LWA-Configuration" delivered by an eNB, if the IE field "lwa-MobilityConfig" contains the following parameters:
   wlan-TimersAndConstants: containing timers and constants of the UE configured as LWA, wherein n351, t352 and n352 are included;
   n351: value "n1" corresponds to 1, "n2" corresponds to 2, i.e., the auxiliary constant of number of times, and so on,
   t352: value "ms0" corresponds to 0 seconds, "ms200" corresponds to 200 seconds, i.e., the timer duration, and so on,
   n352: value "n1" corresponds to 1, "n2" corresponds to 2, i.e., the constant of number of times, and so on,
   the UE sets the timer T352 and the constants N351, N352 as values of t352 and n351, n352 in the parameter "wlan-TimersAndConstants", respectively.
At step 420, if the field "wlan-SuspendResumeAllowed" in the IE "VarWLAN-MobilityConfig" received by the UE is set to TRUE, that is, if the UE is allowed to use the suspend-resume mechanism, and
   if the WLAN connections with all WLANs in the WLAN mobility set become temporarily unavailable, the UE may perform the following operations: determining whether the number of times that WLAN connections with all WLANs in the WLAN mobility set become temporarily unavailable is greater than or equal to N351;
   if the number of times that WLAN connections with all WLANs in the WLAN mobility set become temporarily unavailable is greater than or equal to N351,
   starting or restarting the timer T352;
   setting the field "status" in the IE "VarWLAN-Status" to "suspended"; and
   reporting a WLAN connection status report message, and setting the field "status" in the IE "WLAN-Status" of the message to the value of the field "status" of the IE "VarWLAN-Status", that is, "suspended".
At step 430, the eNB receives the message reported by the UE, and parses the field "status" in the IE "WLAN-Status" of the message; if the parsing result is "suspended", the eNB stores the LWA context of the UE, and sets the field "status" in the IE "WLAN-Status" on the eNB side to the value of the field "status" in the IE "WLAN-Status" of the message on the UE side, that is, "suspended".
At step 440, if the status of WLAN connection is "suspended" in the latest WLAN connection status report reported by the UE, and the WLAN connection with a WLAN in the WLAN mobility set is successfully established or maintained again, the UE performs the following operations:
   setting the field "status" in the IE "VarWLAN-Status" to "resumed"; and
   reporting a WLAN connection status report message, and setting the field "status" in the IE "WLAN-Status" of the message to the value of the field "status" of the IE "VarWLAN-Status", that is, "resumed".
At step 450, the eNB receives the connection status report message reported by the UE and parses the field "status" in the IE "WLAN-Status" of the message; if the parsing result is "resumed", the eNB sets the field "status" in the IE "WLAN-Status" on the eNB side to the value of the field "status" in the IE "WLAN-Status" of the message on the UE side, that is, "resumed".
At step 460, the UE continues to receive and/or send the LWA PDU through the WLAN according to the configuration information in the IE "LWA-Configuration" delivered by the eNB received in the step 410.

Optionally, at step 470, if WLAN connections between the UE and all WLANs in a WLAN mobility set become temporarily unavailable, and the number of times that WLAN connections are temporarily unavailable is greater than or equal to N351, the UE may further perform the following operations:
determining, in a case where the timer T352 is running, whether the number of times that WLAN connections with all WLANs in the WLAN mobility set become temporarily unavailable is greater than or equal to N352 times;
returning to the step 440 if the number of times that WLAN connections with all WLANs in the WLAN mobility set become temporarily unavailable is less than N352 times;
if the number of times that WLAN connections with all WLANs in the WLAN mobility set become temporarily unavailable is greater than or equal to N352,
setting the field "status" in the IE "VarWLAN-Status" to "failureWlanRadioLink"; and
stopping or restarting the timer T352 if the failure is due to a WLAN radio link problem.

At step 480, the UE reports the WLAN connection status report message, sets the field "status" in the IE "WLAN-Status" of the message to the value of the field "status" of the IE "VarWLAN-Status", that is, "failureWlanRadioLink", and stops monitoring the WLAN status and stops attempts to connect to the WLAN.

At step 490, the eNB receives the connection status report message reported by the UE and parses the field "status" in the IE "WLAN-Status" of the message; if the parsing result is "failureWlanRadioLink", the eNB sets the field "status" in the IE "WLAN-Status" on the eNB side to the value of the field "status" in the IE "WLAN-Status" of the message on the UE side, that is, "failureWlanRadioLink".

At step 500, when the timer T352 expires, the UE stops or restarts the timer T352, and returns to the step 420 to continue to monitor the status of WLAN connection. The method for monitoring the WLAN status and the terminal according to this embodiment can solve the problem that the UE cannot effectively monitor the WLAN status.

In an embodiment, there is further provided a storage medium. Optionally, in this embodiment, the storage medium may be configured to store a program code for performing the following steps 10 to 20.

At step 10, configuration information about joint transmission between a wireless local area network (WLAN) and a mobile communication network delivered by a base station is received, wherein the configuration information includes a timer duration and a constant of number of times.

At step 20, the WLAN status is monitored according to the timer duration and the constant of number of times. Optionally, in this embodiment, the storage medium may include, but is not limited to: a U Disk, a read only memory (ROM), a random access memory (RAM), a mobile hard disk, a disk or optical disk, and other medium that can store a program code.

Optionally, in this embodiment, the processor executes the following step according to the stored program code in the storage medium: receiving configuration information, delivered by a base station, about joint transmission between a wireless local area network (WLAN) and a mobile communication network, wherein the configuration information includes the timer duration and the constant of number of times.

Optionally, in this embodiment, the processor executes the following step according to the stored program code in the storage medium: monitoring the WLAN status according to the timer duration and the constant of number of times.

Optionally, specific examples in this embodiment may refer to the examples described in the foregoing embodiments, which will not be repeated herein.

The technical content provided by this embodiment may be embodied in the form of a computer software product, which may be stored in a storage medium, and include a plurality of instructions for causing a computer apparatus (which may be a personal computer, a server, or a network apparatus, etc.) to perform all or part of the steps of the method described in this embodiment.

The above one or more modules or all or part of the steps may be implemented by a general-purpose computing device, which may be concentrated on a single computing device or distributed on a network composed of a plurality of computing devices. Alternatively, they may be realized by computer executable program code, so that they may be stored in a storage device and executed by the computing device; and in some cases, they can perform the shown or described steps in a sequence other than described herein, or they can be made into integrated circuit modules respectively, or a plurality of modules or steps thereof can be made into a single integrated circuit module so as to be realized. The embodiments are not limited to any particular hardware and software combination.

### INDUSTRIAL APPLICABILITY

The present disclosure provides a method, apparatus and terminal for monitoring a WLAN status that can realize effective monitoring of a status of WLAN connection by a UE.

## Claims

1. A method for monitoring a wireless local area network (WLAN) status, comprising:
receiving configuration information, delivered by a base station, about joint transmission between a mobile communication network and a WLAN, wherein the configuration information comprises a timer duration and a first preset threshold of the number of times that WLAN connection is temporarily unavailable; and
monitoring a status of WLAN connection according to the timer duration and the first preset threshold.

2. The method according to claim 1, wherein the step of monitoring the status of WLAN connection according to the timer duration and the first preset threshold comprises:
detecting that WLAN connections with all WLANs in a WLAN mobility set become temporarily unavailable;
setting a timer according to the timer duration, and starting or restarting the timer;
setting the status of WLAN connection to a suspended status; and
reporting the suspended status of WLAN connection to the base station.

3. The method according to claim 2, wherein after reporting the suspended status of WLAN connection to the base station, the method further comprises:
detecting, within the timer duration, the number of times that WLAN connections with all WLANs in the WLAN mobility set become temporarily unavailable, setting, when it is determined that the number of times that WLAN connections with all WLANs in the WLAN mobility set become temporarily unavailable is less than the first preset threshold, the status of WLAN connection to the suspended status, and reporting the suspended status of WLAN connection to the base station.

4. The method according to claim 2, wherein after reporting the suspended status of WLAN connection to the base station, the method further comprises:
detecting, within the timer duration, that WLAN connections with all WLANs in the WLAN mobility set become temporarily unavailable, setting, when it is determined that the number of times that WLAN connections with all WLANs in the WLAN mobility set become temporarily unavailable is equal to or greater than the first preset threshold, the status of WLAN connection to a failed status, stopping the timer, and reporting the failed status of WLAN connection to the base station.

5. The method according to claim 2, wherein after reporting the suspended status of WLAN connection to the base station, the method further comprises:
detecting, in a case where a last reported status of WLAN connection is the suspended status, that a current WLAN connection with a WLAN in the WLAN mobility set is successfully established or maintained again;
setting the status of WLAN connection to a resumed status; and
reporting the resumed status of WLAN connection to the base station.

6. The method according to claim 5, wherein after reporting the resumed status of WLAN connection to the base station, the method further comprises executing at least one of:
receiving a first protocol data unit (PDU) through a WLAN according to the configuration information; and
sending a second protocol data unit (PDU) through a WLAN according to the configuration information.

7. The method according to claim 4, wherein after reporting the failed status of WLAN connection to the base station, the method further comprises executing at least one of:
stopping monitoring the status of WLAN connection; and
stopping attempts to connect to the WLAN.

8. The method according to claim 2, wherein the configuration information further comprises a second preset threshold of the number of times that WLAN connection is temporarily unavailable; and
the step of setting the timer according to the timer duration, and starting or restarting the timer comprises:
setting, when it is detected that the number of times that WLAN connections with all WLANs in the WLAN mobility set become temporarily unavailable is greater than or equal to the second preset threshold, the timer according to the timer duration, and starting or restarting the timer.

9. An apparatus for monitoring a WLAN status, applied to a terminal device, comprising:
a receiving module configured to receive configuration information, delivered by a base station, about joint transmission between a mobile communication network and a WLAN, wherein the configuration information comprises a timer duration and a first preset threshold of the number of times that WLAN connection is temporarily unavailable; and
a monitoring module configured to monitor a status of WLAN connection according to the timer duration and the first preset threshold.

10. The apparatus according to claim 9, wherein the monitoring module comprises:
a first detecting unit configured to detect that WLAN connections with all WLANs in a WLAN mobility set become temporarily unavailable;
a starting unit configured to set a timer according to the timer duration and start or restart the timer, and set the status of WLAN connection to a suspended status; and
a first reporting unit configured to report the suspended status of WLAN connection to the base station.

11. The apparatus according to claim 10, wherein the monitoring module further comprises:
a second detecting unit configured to detect, after the suspended status of WLAN connection is reported to the base station, that WLAN connections with all WLANs in the WLAN mobility set become temporarily unavailable within the timer duration, and determine that the number of times that WLAN connections with all WLANs in the WLAN mobility set become temporarily unavailable is equal to or greater than the first preset threshold;
a first setting unit configured to set the status of WLAN connection to a failed status, and stop the timer; and
a second reporting unit configured to report the failed status of WLAN connection to the base station.

12. The apparatus according to claim 10, wherein the monitoring module further comprises:
a third detecting unit configured to detect, after the suspended status of WLAN connection is reported to the base station and in a case where a last reported status of WLAN connection is the suspended status, that a current WLAN connection with a WLAN in the WLAN mobility set is successfully established or maintained again;
a second setting unit configured to set the status of WLAN connection to a resumed status; and
a third reporting unit configured to report the resumed status of WLAN connection to the base station.

13. The apparatus according to claim 12, wherein the apparatus further comprises:
a transmitting module configured to execute, after the third reporting unit reports the resumed status of WLAN connection to the base station, at least one of: receiving a first protocol data unit (PDU) through a WLAN according to the configuration information; and sending a second protocol data unit (PDU) through a WLAN according to the configuration information.

14. The apparatus according to claim 10, wherein the configuration information further comprises a second preset threshold of the number of times that WLAN connection is temporarily unavailable; and
the starting unit is configured to set, when it is detected that the number of times that WLAN connections with all WLANs in the WLAN mobility set become temporarily unavailable is greater than or equal to the second preset threshold, the timer according to the timer duration, and start or restart the timer.

15. The apparatus according to claim 10, wherein the monitoring module further comprises:
a fourth detecting unit configured to detect, after the suspended status of WLAN connection is reported to the base station, the number of times that WLAN connections with all WLANs in the WLAN mobility set become temporarily unavailable within the timer duration, and determine that the number of times that WLAN connections with all WLANs in the WLAN mobility set become temporarily unavailable is less than the first preset threshold;
a third setting unit configured to set the status of WLAN connection to the suspended status; and
a fourth reporting unit configured to report the suspended status of WLAN connection to the base station.

16. A terminal, comprising:
a processor and a memory storing processor-executable instructions which, when executed by the processor, perform the following operations:
receiving configuration information, delivered by a base station, about joint transmission between a mobile communication network and a WLAN, wherein the configuration information comprises a timer duration and a first preset threshold of the number of times that WLAN connection is temporarily unavailable; and
monitoring a status of WLAN connection according to the timer duration and the first preset threshold.

17. A computer-readable storage medium storing computer executable instructions which, when executed, implement the method according to any one of claims 1 to 8.
